## Europäisches Patentamt

## European Patent Office

## Office européen des brevets

(19)

(11) Veröffentlichungsnummer: **0 118 761**
**B1**

(12)

# EUROPÄISCHE PATENTSCHRIFT

(45) Veröffentlichungstag der Patentschrift:
**13.05.87**

(51) Int. Cl.⁴: **H 04 N 9/81**

(21) Anmeldenummer: **84101285.9**

(22) Anmeldetag: **08.02.84**

(54) Verfahren zur Übertragung, insbesondere zur Aufzeichnung und Wiedergabe von Farbfernsehsignalen.

(30) Priorität: **11.02.83 DE 3304692**

(43) Veröffentlichungstag der Anmeldung:
**19.09.84 Patentblatt 84/38**

(45) Bekanntmachung des Hinweises auf die Patenterteilung:
**13.05.87 Patentblatt 87/20**

(84) Benannte Vertragsstaaten:
**AT BE CH DE FR GB IT LI LU NL SE**

(56) Entgegenhaltungen:
**WO - A - 81/03098**
**US - A - 4 245 235**

**FERNSEH- UND KINO-TECHNIK, Band 34, Nr. 12, Seiten 451-458, Berlin, DE; G. BRAND et al.: " "Timeplex" - ein serielles Farbcodierverfahren für Heim-Videorecorder"**

(73) Patentinhaber: **Deutsche Thomson-Brandt GmbH, Hermann-Schwer-Strasse 3 Postfach 2060, D-7730 Villingen-Schwenningen (DE)**

(72) Erfinder: **Geiger, Erich, Panoramaweg 19, D-7731 Unterkirnach (DE)**
Erfinder: **Otto, Bernhard, Überruckweg 13, D-7730 VS-Rietheim (DE)**

## Beschreibung

Die Erfindung geht aus von einem Verfahren zur Aufzeichnung und Wiedergabe von Farbfernsehsignalen in analoger Form, bei dem auf einer Spur eines Aufzeichnungsträgers ein Leuchtdichtesignal und ein demgegenüber schmalbandigeres Farbartsignal (R–Y), (B–Y) aufgezeichnet werden und das Farbartsignal einer Zeilenperiode während eines Teils der Zeilenperiode in zeitkomprimierter Form und das Leuchtdichtesignal während eines vom zeitkomprimierten Farbartsignal nicht eingenommenen Teils der Zeilenperiode ebenfalls in zeitkomprimierter Form aufgezeichnet werden und bei der Wiedergabe das Farbartsignal und das Leuchtdichtesignal derart expandiert werden, dass sie für die Bildwiedergabe zeitlich übereinstimmen, wobei das Leuchtdichtesignal in der Weise komprimiert wird, dass es nach Digitalisierung in zwei Schieberegister abwechselnd langsam eingelesen und schneller ausgelesen wird, und die Farbartsignale (R–Y), (B–Y) in der Weise komprimiert werden, dass sie nach Digitalisierung von Zeile zu Zeile abwechselnd in ein weiteres Schieberegister eingelesen und schneller ausgelesen werden und die Signale dann wieder in analoge Signale umgewandelt werden und wobei bei der Wiedergabe die Signale unter Verwendung der genannten Schieberegister in entsprechender Weise wieder expandiert werden.

Ein derartiges Verfahren ist z.B. durch die DE-PS 20 56 684 bekannt. Später wurde noch ein unter dem Titel: «Timeplex» – ein serielles Farbcodierverfahren für Heimvideorecorder in der Zeitschrift «Fernseh- und Kinotechnik» 34. Jahrgang, Nr. 12/80, Seiten 451–458 beschrieben, bei welchem die Farbartsignale für B–Y und R–Y in die Austastlücke zeitkomprimiert um den Faktor 5 zwischen Synchronimpulse und Leuchtdichtesignal aufgezeichnet werden.

Das Timeplex-Verfahren gewinnt immer mehr an Bedeutung, nachdem die Aufzeichnung von Videosignalen mit immer kleineren Bandgeschwindigkeiten und kleineren Breiten des Aufzeichnungsträgers vorgenommen wird. Die üblicherweise longitudinale Tonspur ist wegen der geringen Magnetbandbreite und wegen der zu geringen Bandgeschwindigkeit bei 8-mm-Magnetbändern nicht mehr möglich. Deshalb wurde der Ton auf einem gesonderten Träger mit in die Spur für das Video-Signal aufgenommen. Hierbei ergeben sich jedoch nachteilige Beeinflussungen des Tonträgers auf die verschiedenen Trägerfrequenzen der Bildsignale und es ergeben sich Cross-Color-Störungen. Die bisher bekannten Timeplex-Verfahren wurden mit Hilfe von analogen Schaltungen realisiert zur Gewinnung der Chroma-Luminanz- und Synchronsignale. Diese Schaltungen besitzen den Nachteil, dass sie eine Verzögerungsleitung benötigen und dass sich Phasenschwankungen ergeben und dass ein Offset des Luminanzsignals auftreten kann, falls die getrennt aufgezeichneten Synchronimpulse einen schlechten Rauschabstand besitzen. Mit mehr oder weniger Aufwand in den analogen Schaltungen können diese Probleme zwar gelöst werden, jedoch zeigt sich, dass dieser Aufwand nur dann reduziert werden kann, wenn die analogen Schaltungsgruppen durch digitale Bauteile ersetzt werden und die Verarbeitung digital erfolgt. Dies bedeutet, dass auch die Luminanzsignal- und Synchronsignalverarbeitung digitalisiert werden muss.

Derartige Verfahren mit sequentieller Übertragung zeitkomprimierter Signale erfordern einen relativ hohen Schaltungsaufwand. Ausserdem können bei der Wiedergabe zeitliche Verschiebungen zwischen den einzelnen Signalen, z.B. den Zeilensynchronimpulsen und dem Leuchtdichtesignal auftreten.

Es ist auch ein Verfahren bekannt (WO-A-8 103 098), bei dem das Leuchtdichtesignal Y und die Farbdifferenzsignale (R–Y und B–Y) zeitlich komprimiert werden. Die zeitliche Kompression findet jedoch nicht zusammen mit dem Leuchtdichtesignal statt, sondern erfolgt von diesem getrennt. Damit besteht jedoch die Gefahr von Zeitverschiebungen der Synchronimpulse in bezug auf das Leuchtdichtesignal, die auf dem Übertragungsweg entstehen können. Dies beeinträchtigt die Aufzeichnung und deren Wiedergabe infolge der damit verbundenen Synchronisationsfehler.

Der Erfindung liegt die Aufgabe zugrunde, ein Verfahren der beschriebenen Art so auszubilden, dass bei verringertem Schaltungsaufwand Zeitverschiebungen zwischen den einzelnen Signalanteilen nach der Übertragung weitestgehend vermieden werden.

Diese Aufgabe wird durch die im Anspruch 1 beschriebene Erfindung gelöst. Vorteilhafte Weiterbildungen der Erfindung sind in den Unteransprüchen beschrieben.

Dadurch, dass das Leuchtdichtesignal zusammen mit den Zeilensynchronimpulsen und der vorderen und hinteren Schwarzschulter in derselben Schaltung zeitkomprimiert und gegebenenfalls auch zeitexpandiert wird, wird der Schaltungsaufwand gering gehalten, weil für die Behandlung dieser Signalanteile nur eine Schaltung erforderlich ist. Da die Signalanteile bei ihrer Behandlung nicht getrennt werden, werden Zeitverschiebungen zwischen diesen Signalen vermieden. Wenn das kombinierte Signal aus Leuchtdichtesignal, Zeilensynchronimpulsen und vorderen und hinteren Schwarzschulter eine zeitliche Verschiebung erleidet, bleibt die zeitliche Zuordnung zwischen den Zeilensynchronimpulsen und dem Leuchtdichtesignal, die für eine einwandfreie Bildwiedergabe wichtig ist, in vorteilhafter Weise erhalten. Da die Zeitkompression des Leuchtdichtesignals nur etwa 20% beträgt, also auf etwa 80% seiner ursprünglichen Dauer komprimiert wird, bleibt ein ausreichend breiter Zeilensynchronimpuls bestehen, so dass bei der Wiedergabe die Synchronisierung der Ablenkung nicht beeinträchtigt wird. Der Schwarzpegel und der Synchronpegel werden praktisch original zurückgewonnen. Die halbzeilenfrequente Identifikation für die sequentiell übertragenen Farbartsignale kann zusammen mit dem Unbuntpegel erzeugt werden. Zusätzlich kann eine Drop-out-Kompensation mittels einer Speichersteuerung erzielt werden. Durch weitestgehende Integrierung der zur Durchführung des Verfahrens notwendigen Bauteile kann die Aussenbeschaltung niedrig gehalten werden. Ein weiterer Vorteil besteht darin, dass durch die gleichzeitige Kompression von Leuchtdichtesignal und Zeilensynchronimpulsen das Verfahren von der jeweiligen Fernsehnorm unabhängig arbeitet, da das übertragende Signal Original zurückgewandelt wird.

Die Erfindung wird im folgenden an Hand der Zeichnung am Beispiel einer Aufzeichnung und Wiedergabe näher erläutert. Darin zeigen

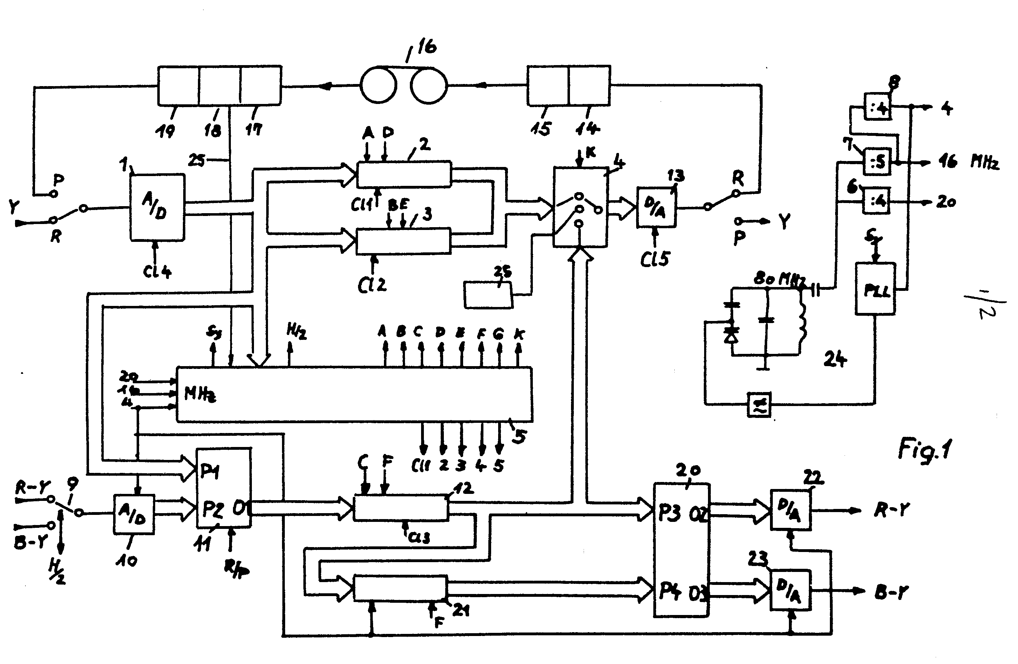

Fig. 1 eine Schaltung zur Durchführung des erfindungsgemässen Verfahrens und

Fig. 2 den zeitlichen Verlauf der in Fig. 1 auftretenden analogen und digitalen Signale.

Das erfindungsgemässe Verfahren ist nicht nur für die Aufzeichnung und Wiedergabe vorteilhaft einsetzbar, sondern allgemein für die Übertragung von Farbfernsehsignalen, z.B. beim Satelliten-Rundfunk nach dem sogenannten C-Mac-System, bei dem ebenfalls eine sequentielle Übertragung mit Zeitkompression erfolgt. Das Verfahren ist ebenso anwendbar bei Übertragung von Farbfernsehsignalen über Kabelstrecken oder sonstige Übertragungskanäle, insbesondere solche, die eine begrenzte Bandbreite haben und Signalverfälschungen wie z.B. zeitliche Verschiebungen der Signalanteile zueinander bewirken.

Zunächst soll die Aufzeichnung eines Farbvideosignals auf ein Magnetband beschrieben werden. Dazu wird das Luminanzsignal Y über den Kontakt R an den Eingang eines Analog-Digitalwandlers 1 gelegt, welcher aus dem analogen Luminanzsignal ein 7 Bit breites paralleles Ausgangssignal liefert, welches gleichzeitig den als Schieberegistern wirkenden Speichern 2 und 3 zugeführt wird. Diese Schieberegister werden wechselweise taktgesteuert eingeschrieben und ausgelesen. Während z.B. das Schieberegister 2 eingelesen wird, wird die im Schieberegister 3 enthaltene Information ausgelesen und an den Eingang eines Schalters 4 gelegt. Die Zeitkomprimierung erfolgt dabei dadurch, dass mit einem Takt von 16 MHz eingelesen und mit einem Takt von 20 MHz ausgelesen wird. Das bedeutet, dass das Luminanzsignal um 20% komprimiert wird, so dass es nur noch etwa 80% seiner ursprünglichen Zeitdauer einnimmt. Die Clock- und Steuerimpulse für die Digital-Analog- und Analog-Digitalwandler und für Schieberegister werden einer Steuereinheit 5 entnommen. Die Taktfrequenzen werden von einem Generator in PLL-Technik entnommen. Die von einem einzigen Generator gewonnene Grundfrequenz von 80 MHz zur Steuerung der gesamten Schaltung wird mit Hilfe von Frequenzteilerstufen 6, 7 und 8 geteilt, so dass die Systemtakte von 20, 16 und 4 MHz entstehen. Die Farbartsignale R–Y und B–Y werden über einen mit halber Zeilenfrequenz H/2 betätigten Umschalter 9 wechselweise an einen Analog-Digitalwandler 10 gelegt, der das Signal in eine 6-Bit-Information umwandelt. Dieses Signal gelangt an den Eingang P2 eines elektronischen Schalters 11, an dessen Ausgang 01 ein Schieberegister 12 angeschlossen ist, welches mit einem von der Steuereinheit 5 gelieferten Takt C1 3 gesteuert wird. Dieser Takt besitzt für das Einlesen eine Frequenz von 4 MHz. Ausgelesen wird mit einer Frequenz von 20 MHz. Die dem Schieberegister 12 entnommene Information wird an die Schaltstufe 4 gelegt, die in Abhängigkeit eines Steuersignals K aus der Steuereinheit 5 ein digitales 7-Bit-Signal erzeugt, welches aus dem Luminanzsignal, den Farbartsignalen und einem festen Pegel zusammengesetzt ist. Das digitale Signal wird sodann über einen Digital-Analogwandler 13 über den Kontakt R an einen FM-Modulator 14 geschaltet und über den Aufnahmeverstärker 15 dem Aufzeichnungsgerät 16 zugeführt.

Zur Wiedergabe des derart aufgezeichneten Signals wird dieses über einen Wiedergabeverstärker 17, einen Drop-out-Detektor 18 und über einen FM-Demodulator 19 über den Kontakt P an den Eingang des Analog-Digitalwandlers 1 geschaltet. Nun wird in umgekehrter Folge aus dem zeitkomprimierten Signal das ursprüngliche Signal zurückgewonnen. Wieder werden die beiden Schieberegister 2 und 3 abwechselnd ein- und ausgelesen. Die ausgelesenen Signale werden an den Eingang des Schalters 4 gelegt, welcher in diesem Fall durch das K-Signal in der Stellung zur Durchschaltung des Luminanzsignals bleibt. Nach einer Digital-Analogumwandlung im Wandler 13 erreicht das Luminanzsignal über den Kontakt P den Ausgang zur weiteren Verarbeitung im angeschlossenen Wiedergabegerät. Das Synchronsignal Sy gelangt an die Steuereinheit 5 und wird dort aufbereitet. Die zeitkomprimierten Farbartsignale gelangen über den Eingang P1 des elektronischen Umschalters 11 an seinen Ausgang 01 und von dort an den Eingang des Schieberegisters 12, dessen Ausgang direkt an den Eingang P3 eines mit halber Zeilenfrequenz H/2 umschaltbaren elektronischen Kreuzschalters 20 gelegt ist. Der Ausgang des Schieberegisters 12 ist ausserdem an den Eingang eines weiteren Schieberegisters 21 gelegt, dessen Ausgang an einem zweiten Eingang P4 des Kreuzschalters 20 führt. Durch das abwechselnde Anliegen von R–Y und B–Y bzw. B–Y und R–Y-Signalen an den Eingängen P3 und P4 und das synchrone Umschalten des Kreuzschalters 20 entstehen an seinem Ausgang 02 das R–Y 6-Bit-Signal und an seinem Ausgang 03 das B–Y 6-Bit-Signal, welche nach einer Umwandlung in den Digital-Analogwandlern 22 und 23 als R–Y- und B–Y-Farbartsignale zur Verfügung stehen. Durch diese Massnahme entsteht eine Mittelung der Farbinformation mit der vorhergehenden gleichartigen Farbinformation.

In vorteilhafter Weise kann die Dropout-Kompensation digital in der Weise erfolgen, dass ein aus dem Dropout-Detektor 18 gewonnenes digitales Steuersignal über eine Leitung 26 die Steuereinheit 5 aktiviert, die daraufhin die Schieberegister 2 und 3 für das Luminanzsignal sowie 12 und 21 für die Farbartsignale mit der vorhergehenden Information erneut lädt.

Das gesamte System wird durch Taktfrequenzen gesteuert, die aus einer Frequenz abgeleitet werden, die von einer einzigen PLL-Schleife 24 erzeugt wird.

In nachstehender Tabelle sind die verschiedenen Clock-Fequenzen in MHz in den verschiedenen Betriebsarten beispielsweise aufgelistet:

| | | Clock 1 | Clock 2 | Clock 3 einlesen | Clock 3 auslesen | Clock 4 | Clock 5 |
|---|---|---|---|---|---|---|---|
| Rec | auslesen von 2 | 20 | einlesen von 3 16 | 4 | 20 | 16 | 20 |
| | einlesen von 2 | 16 | auslesen von 3 20 | 4 | 20 | 16 | 20 |
| Play | auslesen von 2 | 16 | einlesen von 3 20 | 20 | 4 | 20 | 16 |
| | einlesen von 2 | 20 | auslesen von 3 16 | 20 | 4 | 20 | 16 |

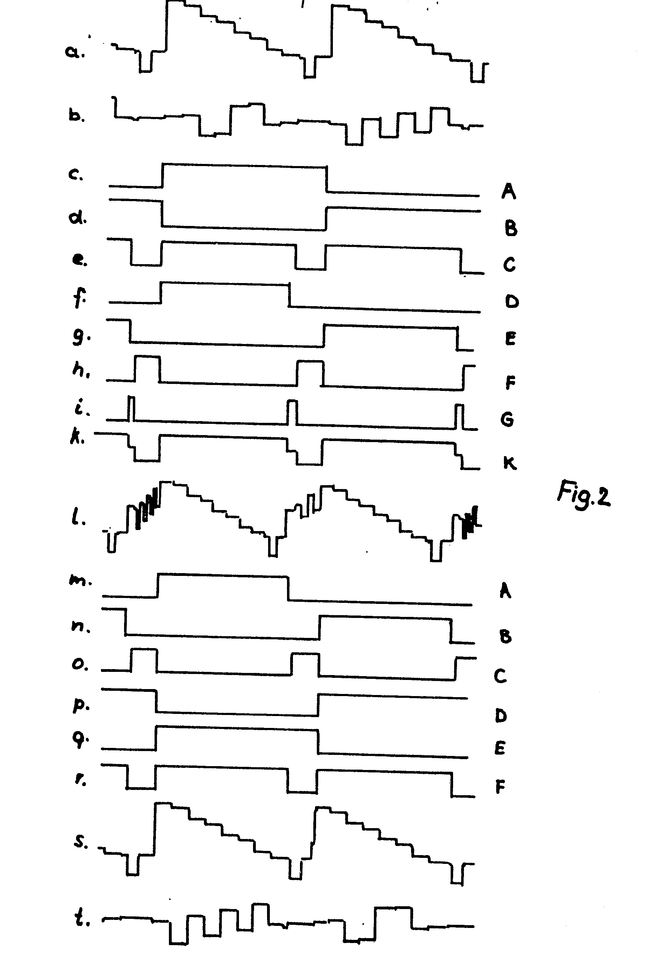

In Figur 2 sind die verschiedenen analogen und digitalen Signale dargestellt.

Figur 2a zeigt das analoge Luminanzsignal Y

Figur 2b zeigt die analogen Farbsignale R–Y und B–Y

Figur 2c zeigt den Steuertakt A zum Einlesen des Schieberegisters 2

Figur 2d zeigt den Steuertakt B zum Einlesen des Schieberegisters 3

Figur 2e zeigt den Steuertakt C zum Einlesen des Schieberegisters 2

Figur 2f zeigt den Steuertakt D zum Auslesen des Schieberegisters 2

Figur 2g zeigt den Steuertakt E zum Auslesen des Schieberegisters 3

Figur 2h zeigt den Steuertakt F zum Auslesen des Schieberegisters 12

Figur 2i zeigt den Unbuntpegel G, der während der Austastlücke von einer Schaltung 25 dem aufzuzeichnenden Signal zugefügt wird

Figur 2k zeigt die Steuerspannung K für den Schalter 4

Figur 2l zeigt das erzeugte Aufzeichnungssignal (Timeplex-Signal).

Die Signale 2a bis 2l gelten für die Wiedergabe und besitzen folgende Frequenzen in MHz:

| A | B | C | D | E | F | G | |
|---|---|---|---|---|---|---|---|
| 16 | 16 | 4 | 20 | 20 | 20 | 20 | MHz |

Für die Wiedergabe gelten folgende Signale:

Figur 2m zeigt den Steuertakt A zum Einlesen des Schieberegisters 2

Figur 2n zeigt den Steuertakt B zum Einlesen des Schieberegisters 3

Figur 2o zeigt den Steuertakt C zum Einlesen des Schieberegisters 12

Figur 2p zeigt den Steuertakt D zum Auslesen des Schieberegisters 2

Figur 2q zeigt den Steuertakt E zum Auslesen des Schieberegisters 3

Figur 2r zeigt den Steuertakt F zum Auslesen des Schieberegisters 12 und zum Einlesen des Schieberegisters 21

Figur 2s zeigt das dekomprimierte Luminanzsignal Y

Figur 2t zeigt die dekomprimierten Chrominanzsignale B–Y und R–Y

Wobei die Frequenzen der Steuertakte A bis F folgende Werte in MHz besitzen:

| A | B | C | D | E | F | |
|---|---|---|---|---|---|---|
| 20 | 20 | 20 | 16 | 16 | 4 | MHz |

Eine Schaltung zur Durchführung des vorbeschriebenen Verfahrens eignet sich besonders gut für einen Aufbau in integrierter Schaltungstechnik. Um die Schaltung sehr flexibel und kostengünstig zu gestalten, wird vorgeschlagen, diese in mehrere Gruppen aufzuteilen, wobei die Timer- und Steuerschaltung 5 sowie die Schieberegister 2, 3, 12 und 21 sowie der Analog-Digital-Wandler 10 und die Digital-Analog-Wandler 22 und 23 auf einem N-MOS-IC und der Analog-Digital-Wandler 1 zusammen mit dem Digital-Analog-Wandler 13 und die PLL-Schaltung 24 mit den Frequenzteilern 6, 7 und 8 auf je einem bipolaren IC angeordnet sind.

**Patentansprüche**

1. Verfahren zur Aufzeichnung und Wiedergabe von Farbfernsehsignalen in analoger Form, bei dem auf einer Spur eines Aufzeichnungsträgers ein Leuchtdichtesignal und ein demgegenüber schmalbandigeres Farbartsignal (R–Y, B–Y) aufgezeichnet werden und das Farbartsignal einer Zeilenperiode während eines Teiles der Zeilenperiode in zeitkomprimierter Form und das Leuchtdichtesignal während eines vom zeitkomprimierten Farbartsignal nicht eingenommenen Teils der Zeilenperiode ebenfalls in zeitkomprimierter Form aufgezeichnet werden und bei der Wiedergabe das Farbartsignal und das Leuchtdichtesignal derart expandiert werden, dass sie für die Bildwiedergabe zeitlich übereinstimmen, wobei das Leuchtdichtesignal in der Weise komprimiert wird, dass es nach Digitalisierung in zwei Schieberegister abwechselnd langsam eingelesen und schneller ausgelesen wird, und die Farbartsignale (R–Y, B–Y) in der Weise komprimiert werden, dass sie nach Digitalisierung von Zeile zu Zeile abwechselnd in ein weiteres Schieberegister eingelesen und schneller ausgelesen werden und die Signale dann wieder in analoge Signale umgewandelt werden und wobei bei der Wiedergabe die Signale unter Verwendung der genannten Schieberegister in entsprechender Weise wieder expandiert werden, dadurch gekennzeichnet, dass bei der Aufzeichnung das Leuchtdichtesignal zusammen mit dem Horizontalsynchronimpuls und der vorderen und hinteren Schwarzschulter zeitkomprimiert wird.

2. Verfahren nach Anspruch 1, dadurch gekennzeichnet, dass eine einzige PLL-Schaltung (24) vorgesehen ist, welche eine Grundtaktfrequenz erzeugt, aus der mit Hilfe von Frequenzteilerstufen (6, 7, 8) die verschiedenen Taktimpulse zur Steuerung der Digital-Analog-Wandler und der Schieberegister gewonnen werden.

3. Verfahren nach Anspruch 1, dadurch gekennzeichnet, dass die Frequenzteiler (6, 7, 8) in Relation zu den Synchronimpulsen zu definierten Zeitpunkten zurückgesetzt werden, um bei gradzahligen Vielfachen der Ausgangsfrequenz der Teilerstufen zueinander gleichzeitig auftretende Flanken der Taktimpulse und damit gleiche Einlese- und Auslesezeitpunkte bei Wandlung und Rückwandlung der zeitkomprimierten Signale zu erhalten.

4. Verfahren nach Anspruch 1, dadurch gekennzeichnet, dass die digitalen Bausteine für die Zeitkompression und die Zeitexpansion doppelt ausgenutzt werden.

5. Schaltungsanordnung zur Durchführung des Verfahrens nach einem oder mehreren der Ansprüche 1–4, dadurch gekennzeichnet, dass die Timer- und Steuerschaltung (5) sowie die Schieberegister (2, 3, 12, 21) und der Analog-Digital-Wandler (10) sowie die Digital-Analog-Wandler (22, 3) auf einem N-MOS-IC und der Analog-Digital-Wandler (1) und der Digital-Analog-Wandler (13) und die PLL-Schaltung (24) mit den Frequenzteilern (6, 7, 8) auf je einem bipolaren IC angeordnet sind.

**Revendications**

1. Procédé pour l'enregistrement et la reproduction de signaux de télévision en couleur sous une forme analogique, selon lequel, sur une piste d'un support d'enregistrement, un signal de luminance et un signal de chrominance à bande étroite correspondant (R–Y), (B–Y) sont enregistrés et le signal de chrominance d'une période de ligne est enregistré pendant une partie de la période de ligne sous une forme temporellement comprimée tandis que le signal de luminance est également enregistré sous une forme temporellement comprimée pendant une partie de la période de ligne qui n'est pas occupée par le signal de chrominance temporellement comprimé, alors que, lors de la reproduction, le signal de chrominance et le signal de luminance sont expansés de telle sorte qu'ils soient temporellement en concordance pour la reproduction d'image, le signal de luminance étant comprimé d'une manière telle que, après conversion numérique, il soit alternativement introduit lentement et extrait rapidement de deux registres à décalage tandis que les signaux de chrominance (R–Y), (B–Y) sont comprimés de telle sorte que, après conversion numérique de ligne en ligne ils soient alternativement introduits dans et extraits rapidement d'un autre registre à décalage, les signaux étant ensuite à nouveau convertis en signaux analogiques et, lors de la reproduction, les signaux étant à nouveau expansés d'une manière correspondante en utilisant les registres à décalage précités, caractérisé en ce que, lors de l'enregistrement, le signal de luminance est comprimé temporellement en même temps que l'impulsion de synchronisation horizontale et les paliers de noir avant et arrière.

2. Procédé selon la revendication 1, caractérisé en ce qu'il est prévu un seul circuit PLL (24), qui produit une fréquence fondamentale de synchronisation à partir de laquelle sont obtenues, à l'aide des étages de division de fréquence (6, 7, 8), les différentes impulsions de synchronisation servant à la commande des convertisseurs numériques-analogiques et des registres à décalage.

3. Procédé selon la revendication 1, caractérisé en ce que les diviseurs de fréquences (6, 7, 8) sont remis en relation avec les impulsions de synchronisation à des instants définis, de façon à obtenir, pour des multiples pairs de la fréquence de sortie des étages de division, des flancs des impulsions de synchronisation se produisant relativement simultanément, et par conséquent des instants identiques d'enregistrement et de lecture lors de la conversion et de la régénération des signaux comprimés temporellement.

4. Procédé selon la revendication 1, caractérisé en ce que les composants numériques pour la compression temporelle et l'expansion temporelle sont utilisés en double.

5. Agencement de circuit pour la mise en œuvre du procédé selon une ou plusieurs des revendications 1 à 4, caractérisé en ce que le circuit de synchronisation et de commande (5) ainsi que les registres à décalage (2, 3, 12, 21) et le convertisseur analogique-numérique (10) et les convertisseurs numériques-analogiques (22, 23) sont formés sur un circuit intégré N-MOS tandis que le convertisseur analogique-numérique (1) et le convertisseur numérique-analogique (13) et le circuit PLL (24) avec les diviseurs de fréquence (6, 7, 8) sont formés chacun sur un circuit intégré bipolaire.

## Claims

1. A method of recording and reproducing colour television signals in analogue form, wherein a luminance signal and a comparatively narrower band chrominance signal (R–Y, B–Y) are recorded on one track of a record carrier and the chrominance signal of one line period is recorded in time-compressed form during one part of the line period and the luminance signal is recorded, likewise in time-compressed form, during a part of the line period which is not taken up by the time-compressed chrominance signal, and during the reproduction, the chrominance signal and the luminance signal are expanded in such a manner that they coincide in time for image reproduction, wherein the luminance signal is compressed, after digitalization, by being alternately read in slowly and read out more quickly at two shift registers, and the chrominance signals (R–Y, B–Y) is compressed, after digitalization, by being read in more slowly and read out more quickly, alternately from line to line, in a further shift register, and the signals are then again converted into analogue signals, and wherein, during the reproduction, the signals are expanded again in a corresponding manner, using the said shift registers, characterised in that, during the recording, the luminance signal is time-compressed together with the horizontal sync pulse and the front and back porches.

2. A method as claimed in Claim 1, characterised in that a single phase-locked loop circuit (24) is provided which generates a basic clock frequency from which the various clock pulses for controlling the digital-analogue converters and the shift registers are obtained by means of frequency divider stages (6, 7, 8).

3. A method as claimed in Claim 1, characterised in that the frequency dividers (6, 7, 8) are set back in relation to the synchronizing pulses at defined moments in order with even-numbered multiples of the output frequency of the divider stages, to maintain edges of the clock pulses appearing simultaneously with one another and hence the same read-in and read-out moments during conversion and re-conversion of the time-compressed signals.

4. A method as claimed in Claim 1, characterised in that the digital components for the time-compression and the time expansion are used twice.

5. A circuit arrangement for carrying out the method as claimed in one or more of the Claims 1–4, characterised in that the timer and control circuit (5), the shift registers (2, 3, 12, 21) analogue-digital converter (10), and the digital-analogue converters (22, 3) are disposed on an N-MOS-IC, and the digital-analogue converter (13) and the phase-locked loop circuit (24) with the frequency dividers (6, 7, 8) are each disposed on a bipolar IC (integrated circuit).

Fig.1

Fig.2